# EUROPEAN PATENT APPLICATION

(11) **EP 2 679 320 A1**
(43) Date of publication of application: **01.01.2014**
(21) Application number: 13003015.8
(22) Date of filing: 12.06.2013
(51) Int. Cl.: B21D 47/04, B01J 35/04

(54) **Method for producing metallic catalyst support**

(30) Priority: 29.06.2012 JP 2012146495
(71) Applicant: Calsonic Kansei Corporation, Saitama-shi Saitama 331-8501 (JP)
(72) Inventor: Fournier, Olivier, Saitama-shi, Saitama, 331-8501 (JP)
(74) Representative: Hoefer & Partner

(57) **Abstract**

A method is provided for producing a metallic catalyst support. In producing the metallic catalyst support, a first metal foil having a planar profile or slightly corrugated profile, a second metal foil having a corrugated profile and an external cylinder are prepared. The first and second metal foils are rolled up in a multilayered superimposed state to form a honeycomb body with a spiral roll form. The honeycomb body is fitted into the external cylinder, which has an inside diameter larger than an outside diameter of the honeycomb body. Pressure is simultaneously applied to the external cylinder into which the honeycomb body has been fitted and to the honeycomb body from outside towards inside of the external cylinder to squeeze-down and to induce plastic deformation in an outside edge section of the honeycomb body so that tight contact is made with the external cylinder.

## Description

### CROSS-REFERENCE TO RELATED APPLICATIONS

This application claims priority to Japanese Patent Application No. 2012-146495, filed on June 29, 2012. The entire disclosure of Japanese Patent Application No. 2012-146495 is hereby incorporated herein by reference.

### BACKGROUND

### Field of the Invention

The present invention generally relates to a method for producing a metallic catalyst support used to purify exhaust gases in an automobile or the like.

### Background Information

Due to their low airflow resistance with respect to exhaust gases expelled from the engine, metallic catalyst supports are suited to achieving higher output by the engine. Moreover, a honeycomb body is often used as the metal support because it can be directly joined to the external cylinder, obviating the need for retaining members and making smaller size possible.

Japanese Laid-Open Patent Application 2010-17605 presents one known conventional method for producing a metallic catalyst support. In this conventional method for producing a metallic catalyst support, a metal foil having a corrugated profile and a metal foil having a planar profile, in a superimposed condition are multiply rolled up into a honeycomb body of roll form. Then, using split dies split into multiple sections having on their inner surfaces protruding parts for forming serrations, pressure is applied radially inward to the outside periphery of the honeycomb, creating a serration profile on the outside peripheral surface of the honeycomb. The metallic catalyst support is then obtained by pressure fitting the honeycomb body furnished with these serrations into the external cylinder along the axial direction.

### SUMMARY

However, the above mentioned method for producing a metallic catalyst support has problems such as those described below. With the above mentioned method for producing a metallic catalyst support, the honeycomb body would have serrations formed on the outer periphery thereof and would be pressure fitted into the external cylinder while undergoing uniform diameter reduction to become lodged therein. While the method makes satisfactory pressure fitting possible, often, the pressure fitting of the honeycomb body into the external cylinder also applies pressure in the axial direction, which causes the serrations to experience deformation both in a radial direction and the axial direction from the distal end side thereof in the axial direction. As a result, the serrations fail to undergo diameter reduction in the intended uniform fashion, and giving rise to the problems of stress concentration, excessive deformation of cells to a greater extent than intended, or damage to the foil of the substrate.

In view of the above mentioned problems, one object of the present invention is to provide a method for producing a metallic catalyst support that can prevent excessive deformation of the cells of the honeycomb body, or that can prevent damage to the foil of the substrate, during installation of the honeycomb body in contact against the external cylinder.

In view of the state of the known technology, a first aspect of the present invention is to provide a method for producing a metallic catalyst support that basically comprises
preparing a first metal foil having a planar profile or slightly corrugated profile, a second metal foil having a corrugated profile, and an external cylinder;
rolling up the first and second metal foils in a multilayered superimposed state to form a honeycomb body with a spiral roll form;
fitting the honeycomb body into the external cylinder, which has an inside diameter larger than an outside diameter of the honeycomb body; and
applying pressure simultaneously to the external cylinder into which the honeycomb body has been fitted and to the honeycomb body from outside towards inside of the external cylinder to squeeze-down and to induce plastic deformation in an outside edge section of the honeycomb body so that tight contact is made with the external cylinder.

In accordance with a second aspect of the present invention, the method of the first aspect further comprises forming groove parts in the outermost peripheral part of the honeycomb body after the forming of the honeycomb body but prior to the fitting of the honeycomb body into the external cylinder.

In accordance with a third aspect of the present invention, the method of the second aspect is performed such that the forming of the groove parts forms a plurality of grooves that are parallel to a center axis of the honeycomb body.

In the method for producing a metallic catalyst support according to the first aspect of the present invention, pressure is applied simultaneously to the honeycomb body and to the external cylinder, from the outside towards the inside of the external cylinder into which the honeycomb body has been fitted, to bring about squeeze-down and thereby induce plastic deformation in the outside edge section of the honeycomb body into tight contact against the external cylinder. Therefore, excessive deformation of the cells of the honeycomb body to a greater extent than intended, or damage to the foil, can be prevented during installation of the honeycomb body in tight contact against the external cylinder.

In the method for producing a metallic catalyst support according to the second aspect of the present invention, there is furnished a groove part formation step between the honeycomb body formation step and the fitting step, for forming groove parts in the outermost peripheral part of the honeycomb body, whereby during application of pressure simultaneously to the honeycomb body and to the external cylinder, from the outside towards the inside of the external cylinder into which the honeycomb body has been fitted, in order to bring about squeeze-down thereof, plastic deformation can be induced more readily and uniformly in the outside edge section of the honeycomb body, so as to bring about tight contact against the external cylinder.

In the method for producing a metallic catalyst support according to the third aspect of the present invention, the grooves of the groove parts are made parallel to the center axis of the honeycomb body, whereby compressive deformation of the groove parts in the squeeze-down step can take place smoothly.

### BRIEF DESCRIPTION OF THE DRAWINGS

Referring now to the attached drawings which form a part of this original disclosure:

Figure 1 is a diagram illustrating the honeycomb body formation step in a method for producing a metallic catalyst support of a first embodiment of the present invention;

Figure 2 is a perspective view showing the honeycomb body in a state following completion of formation thereof in the honeycomb body formation step.

Figure 3 is a diagram illustrating the groove part formation step, showing the honeycomb body in a state immediately prior to forming the groove parts on the outermost periphery;

Figure 4 is a diagram illustrating the groove part formation step, showing the honeycomb body in a state following completion of formation of the groove parts on the outermost periphery;

Figure 5 is a perspective view showing the honeycomb body following completion of formation of the groove parts in the groove part formation step;

Figure 6 is a diagram illustrating the squeeze-down step for constricting, from the outside towards the inside, the external cylinder into which the honeycomb body has been fitted;

Figure 7 is a cross sectional side view of a metallic catalyst support produced by the method for producing a metallic catalyst support of the first embodiment; and

Figure 8 is a perspective view of a metallic catalyst support produced by the method for producing a metallic catalyst support of the first embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

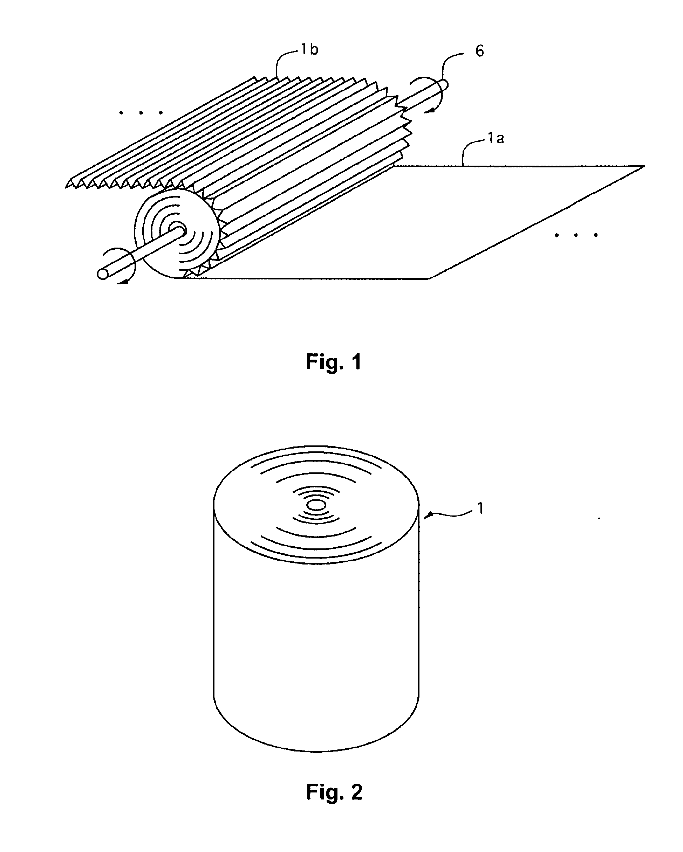

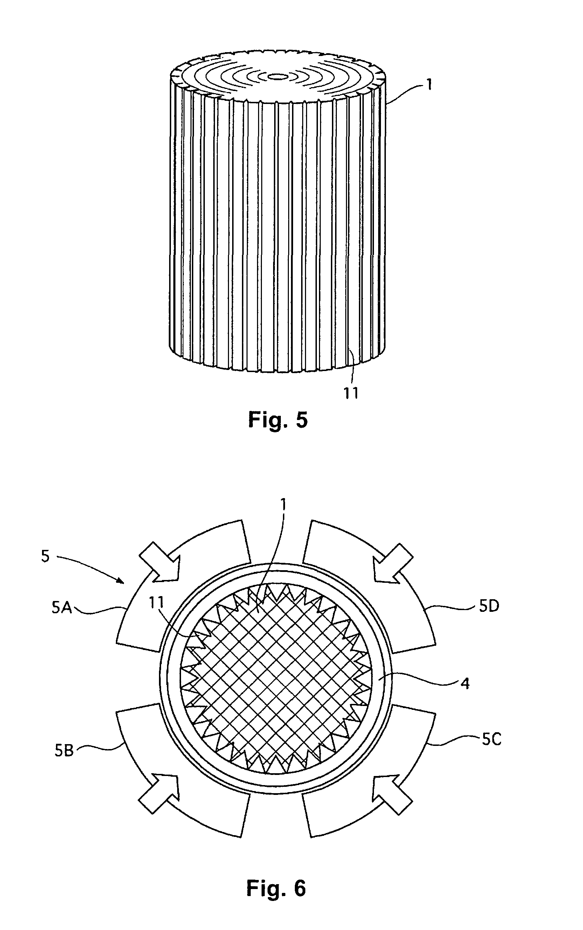

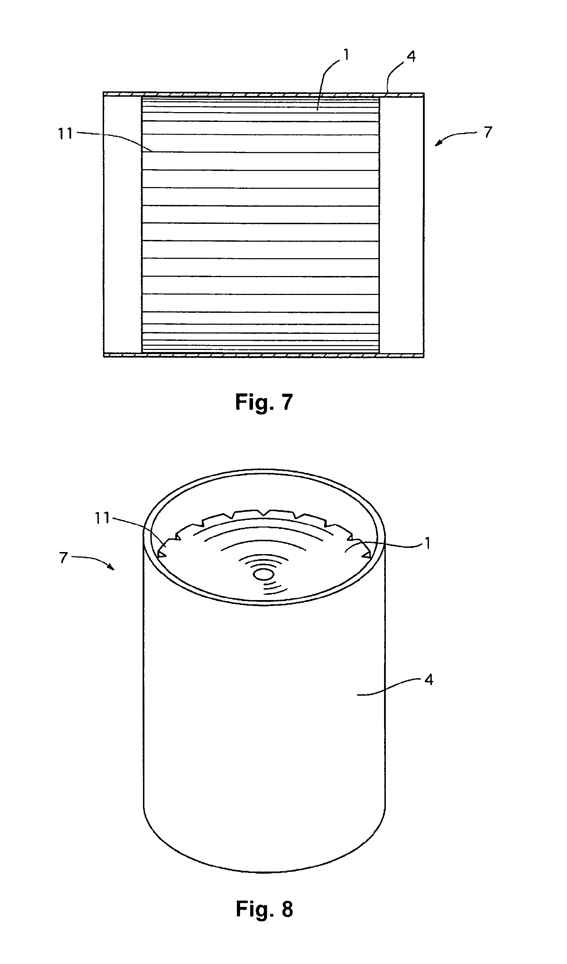

Referring initially to Figure 1, the overall constituent features of the method for producing a metallic catalyst support shall be described first. In the method for producing a metallic catalyst support of this first embodiment, as shown in Figure 1, first, a first metal foil 1a, a second metal foil 1b and an external cylinder 4 are prepared. In particular, the metal foil 1a is prepared with a planar profile or slightly corrugated profile for supporting a catalyst. The metal foil 1b is prepared with a corrugated profile. The external cylinder 4 is prepared in such a manner as shown in Figures 6 and 8. This first step is referred to as a preparatory step.

Next, a honeycomb body formation step is performed. In the honeycomb body formation step, a long length of the metal foil 1a of the planar profile or slightly corrugated profile and a long length of the metal foil 1b of the corrugated profile are superimposed as shown in Figure 1, so that the metal foil 1a of the planar profile (or the slightly corrugated profile) is positioned at the outside. After anchoring the metal foils 1a and 1b at one end (leading end part) to a roller shaft 6, both of the metal foils 1a and 1b are superimposed and rolled up into roll form having a plurality of rolls.

Thereafter, both of the metal foils 1a and 1b having been rolled up are secured by spot welding or the like, to form a honeycomb body 1 such as shown in Figure 2. In this honeycomb body formation step, a machining apparatus such as disclosed, for example, in Japanese Laid-Open Patent Application 2006-239580 may be employed.

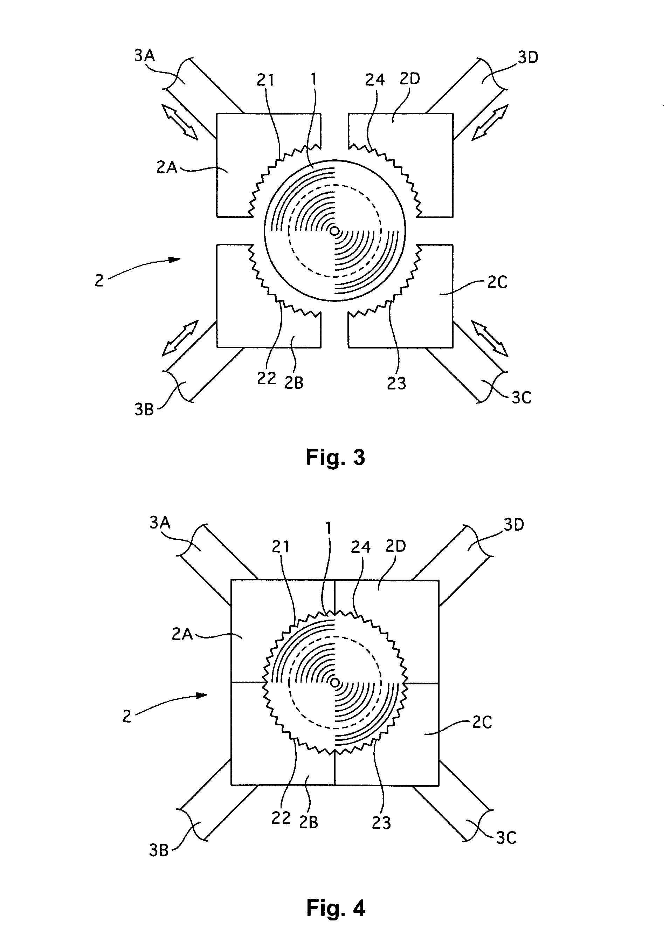

Next, in order to form serration parts (groove parts) on the outer periphery of the honeycomb body 1, the honeycomb body 1 is moved to a serration machining apparatus 2, shown in Figure 3, and positioned on a positioning stage (not shown), to enter a groove part formation step. Specifically, as shown in the drawing, the serration machining apparatus 2 is equipped with a plurality (in the present embodiment, four) of split dies 2A to 2D, and with air cylinders (not shown) having piston rods 3A to 3D corresponding to the respective split dies 2A to 2D.

As shown in Figure 4, in the assembled state in which these split dies 2A to 2D have moved towards the axial center of the positioned honeycomb body 1, the dies form a circular hole. Also the inside peripheral surfaces of these hole sections are furnished with serration-forming protruding parts 21 to 24 that have a plurality of protruding serrations running parallel to the center axis. In this way, these split dies 2A to 2D form a plurality of serration parts 11 on the outside peripheral surface of the honeycomb body 1.

The four air cylinders are respectively linked to the split dies 2A to 2D at the distal end sections of these piston rods 3A to 3D, so as to move the split dies 2A to 2D in radial directions through extension and retraction in a radial direction as shown by arrows in Figure 3.

Figure 3 shows a state in which the split dies 2A to 2D have been moved radially outward, and in which the honeycomb body 1 has been positioned inside the hole sections of the split dies 2A to 2D. In this state, as the air cylinders are operated, the piston rods 3A to 3D extend radially inward such that the serration-forming protruding parts 21 to 24 on the inside peripheral surfaces of the split dies 2A to 2D come into contact against the outside peripheral surface of the honeycomb body 1. As the serration-forming protruding parts 21 to 24 advance further radially inward, the split surfaces (side surfaces) of the split dies 2A to 2D come into contact with one another as shown in Figure 4, and the split dies 2A to 2D come to a halt at this position.

At this time, the serration-forming protruding parts 21 to 24 touch against the outside peripheral surface of the honeycomb body 1, pushing the surface radially inward and inducing permanent deformation thereof. In this way, a serration part 11 having a plurality of indented grooves (indented serrations) parallel to the center axis of the honeycomb body 1 is thereby formed on the outside peripheral surface thereof as shown in Figure 5.

Thereafter, the air cylinders are operated to withdraw the piston rods 3A to 3D radially outward, retracting the split dies 2A to 2D radially outward away from the honeycomb body 1. Consequently, the honeycomb body 1 is freed from the split dies 2A to 2D, and having been removed from the positioning stage, and then proceeds to the fitting step.

Next, a fitting step is performed using an external cylinder 4, which has an inside diameter slightly larger than the outside diameter of the honeycomb body 1 and an axial direction dimension somewhat longer than the axial direction dimension of the honeycomb body 1. The external cylinder 4 has been previously prepared in advance. In the fitting step, the honeycomb body 1 is inserted inside a through-bore of the external cylinder 4, as shown in Figure 6.

In Figures 5 to 8, the number of serrations has been reduced, and the height and other dimensions thereof are depicted exaggerated to larger than actual size, in order to facilitate understanding of the details of the serration part 11.

Next, the honeycomb body 1 which has been fitted into the external cylinder 4 is positioned on the positioning stage, not shown, of a squeeze-down apparatus 5, and proceeds to the squeeze-down step. In the squeeze-down apparatus 5, split dies 5A to 5D of a circular cylinder split into a plurality of sections (in the present embodiment, four) are connected to the piston rods of air cylinders, not shown. In this arrangement, it is possible to extend and retract the piston rods in a radial direction towards the center axis of the honeycomb body 1. When the split dies 5A to 5D are moved radially inward, the external cylinder 4 is compressed towards the inside from the outside in a radial direction, and when the split dies 5A to 5D are moved radially outward, they retract away from the external cylinder 4.

As shown in Figure 6, after the honeycomb body 1 has been fitted into the gap inside of the split dies 5A to 5D, the split dies 5A to 5D are moved radially inward, compressing and squeezing down the external cylinder 4 radially inward. Thereupon, the external cylinder 4 is swaged radially inward, coming into contact against the serration parts of the outside peripheral surface of the honeycomb body 1 and inducing radially inward deformation thereof. In the course of this deformation, because the serration parts 11 have been formed on the outside peripheral surface of the honeycomb body 1, these protruding serrations experience deformation towards the radially inward side and, simultaneously, in the circumferential direction. In this way, the groove parts are narrowed between the serrations in the circumferential direction.

Consequently, deformation of the serration parts 11 does not entail the action of pressing force in the axial direction as in the prior art, and therefore deformation can be brought about easily and uniformly. At this time, the serration parts 11 formed on the outside periphery of the honeycomb body 1 are secured in tight contact against the inside surface of the external cylinder 4, and a metallic catalyst support 7 such as that shown in Figures 7 and 8 is obtained.

After the squeeze-down step, the metallic catalyst support 7 is removed from the squeeze-down apparatus 5, and is transferred to a welding step or the like, where the external cylinder 4 and the honeycomb body 1 are securely attached by welding or the like.

Next, the effects of the method for producing the metallic catalyst support 7 of the first embodiment are described.

In the method for producing the metallic catalyst support 7 of the first embodiment, after the honeycomb body 1 has been fitted into the external cylinder 4, the outside periphery of the external cylinder 4 is squeezed down radially inwardly from the outside. Therefore the honeycomb body 1 is not subjected to the action of pressing force on in the axial direction as in the prior art. As a result, the honeycomb body 1 can be deformed more uniformly in the radial direction, and can easily be secured in tight contact inside the external cylinder 4.

In other words, in the disclosed method for producing the metallic catalyst support 7, excessive deformation of the cells of the honeycomb body is prevented, and/or damage to the foil of the substrate is prevented, during installation of the honeycomb body 1 in tight contact against the external cylinder 4.

Defects stemming from rupture of the catalyst layer can be inhibited as well in this case.

Additionally, because the groove parts are formed on the outside peripheral surface of the honeycomb body 1 prior to the above described fitting step, during radially inward squeeze-down of the external cylinder 4 and the honeycomb body 1, the outside peripheral section of the honeycomb body 1 can be induced to deform in such a way as to narrow the groove parts. As a result, the honeycomb body 1 can be more easily and uniformly lodged within the external cylinder 4 in a state of being secured in tight contact there against.

Moreover, because the groove parts are formed in a direction parallel to the center axis of the honeycomb body 1, during the above described squeeze-down step, the protruding serrations of the outside peripheral surface of the honeycomb body 1 deform in such a way as to spread out in the circumferential direction thereof and narrow adjacent serration grooves, whereby the honeycomb body 1 can be more easily and uniformly lodged within the external cylinder 4 in a state of being secured in tight contact there against.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The terms of degree such as "slightly", "substantially", "about" and "approximately" as used herein mean an amount of deviation of the modified term such that the end result is not significantly changed. For example in the present invention, the phrase "slightly corrugated profile" as used herein refers to a profile that is functionally equivalent to a planar profile with respect to the corrugated profile of the metal foil 1b for supporting a catalyst.

While only selected embodiments have been chosen to illustrate the present invention, it will be apparent to those skilled in the art from this disclosure that various changes and modifications can be made herein without departing from the scope of the invention as defined in the appended claims. For example, the number of split dies 2A to 2D and 5A to 5D may be determined as appropriate. Moreover, the shape, dimension, and placement of the groove parts may be established, as appropriate, depending on the intended use or conditions, or other considerations. The groove formation step is not essential, and may be omitted. Also it is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A method for producing a metallic catalyst support, the method comprising:
preparing a first metal foil having a planar profile or slightly corrugated profile, a second metal foil having a corrugated profile, and an external cylinder;
rolling up the first and second metal foils in a multilayered superimposed state to form a honeycomb body with a spiral roll form;
fitting the honeycomb body into the external cylinder, which has an inside diameter larger than an outside diameter of the honeycomb body; and
applying pressure simultaneously to the external cylinder into which the honeycomb body has been fitted and to the honeycomb body from outside towards inside of the external cylinder to squeeze-down and to induce plastic deformation in an outside edge section of the honeycomb body so that tight contact is made with the external cylinder.

2. The method according to claim 1, further comprising
forming groove parts in the outermost peripheral part of the honeycomb body after the forming of the honeycomb body but prior to the fitting of the honeycomb body into the external cylinder.

3. The method according to claim 2, wherein
the forming of the groove parts forms a plurality of grooves that are parallel to a center axis of the honeycomb body.
